# EUROPÄISCHE PATENTANMELDUNG

(11) **EP 0 710 467 A2**
(43) Veröffentlichungstag der Anmeldung: **08.05.1996**
(21) Anmeldenummer: 95116627.1
(22) Anmeldetag: 21.10.1995
(51) Int. Cl.: A61C 11/00

(54) **Anordnung zum Halten eines zahnmedizinisches Modells in einem Modellbehalter**

(30) Priorität: 27.10.1994 DE 9414206 U
(71) Anmelder: Vecellio, André, CH-6331 Hünenberg (CH); Bomio, Renzo, CH-6015 Reussbühl (CH)
(72) Erfinder: Vecellio, André, CH-6331 Hünenberg (CH); Bomio, Renzo, CH-6015 Reussbühl (CH)
(74) Vertreter: Schubert, Siegmar, Dipl.-Ing.

(57) **Zusammenfassung**

In einer Anordnung von aneinander angepaßten Befestigungs- und Positionierteilen wird ein zahnmedizinisches Modell (16,16') in einem Modellhalter, insbesondere Artikulator, lösbar gehalten. Damit das Modell gut von dem Modellhalter getrennt werden kann, können eine Matrize (1) mit mehreren Vertiefungen (14 bis 16) und eine Patrize (10,10') mit mehreren an die Vertiefungen (4 bis 6) der Matrize (1) angepaßten Erhöhungen (12 bis 14) mit einer Trägerplatte (15,18) oder einer Aufnahme des Modells (16,16') fest verbunden werden.

## Beschreibung

Die Erfindung betrifft eine Anordnung von aneinander angepaßten Befestigungs- und Positionierteilen, welche ein zahnmedizinisches Modell in einem Modellhalter, insbesondere Artikulator, lösbar halten.

Es ist bekannt, Modelle der Zahnmedizin, insbesondere vollständige Gebisse mit Oberkiefer und Unterkiefer, aber auch nur Teile hiervon, insbesondere künstliche Zähne, in einen Modellhalter, insbesondere Artikulator, lösbar einzuspannen. Der Artikulator überprüft die Kaufunktion des künstlichen Gebisses für Gebiß- oder Kieferkorrekturen voll oder nur in Teilen davon. Für Gebißkorrekturen sind die Gebißteile dem Artikulator zu entnehmen, nachzuarbeiten und wieder zur Überprüfung in den Artikulator einzusetzen.

Zu der präzisen und demontierbaren Halterung der Modellformen in Artikulatoren ist eine Anordnung aus der Praxis bekannt, bei welcher die Aufnahmevorrichtung des Artikulators selbst konische Hülsen aufweist, die mit Stiften, welche in das Modell eingelassen sind, in Verbindung treten können. - Nachteilig ist hierbei jedoch der Raumbedarf der bekannten Anordnung, die insbesondere viel Höhe benötigt. Abgesehen davon ist die präzise Funktion der bekannten Anordnung gefährdet, weil die Stifte herausbrechen können. Dies hat oft zur Folge, daß das gesamte Gipsmodell nochmals hergestellt und von Anfang an bearbeitet werden muß.

Der Erfindung liegt daher die Aufgabe zugrunde, eine Anordnung zur präzisen demontierbaren Halterung des Modells zu schaffen, bei deren Anwendung sich die Modellteile gut von dem Artikulator trennen lassen. Selbst nach vielen Trennvorgängen sollen die Positionen, in welche die Modellteile eingesetzt werden, genau reproduzierbar sein.

Diese Aufgabe wird durch die grundlegende Ausbildung der Anordnung mit den in dem kennzeichnenden Teil des Anspruchs 1 angegebenen Merkmalen gelöst.

Damit kann im einzelnen nach einer ersten Variante die Patrize auf eine Hilfsträgerplatte aufgesetzt werden, anschließend die Matrize aufgesteckt und das Zahnmodell gegossen werden, aus Gips, Epoxy oder ähnlichen Stoffen. Nach Aushärten kann die Hilfsträgerplatte entfernt, das Modell mit aufgesetzter Matrize von der Gegenseite isoliert und der Grundsockel gegossen werden, der einen Basisbestandteil des Modellhalters bildet.

Die sich daraus ergebenden Zustände der Anordnung sind in den Ansprüchen 2 bis 4 angegeben.

Nach einer zweiten Variante kann an die Trägerplatte des Modells die Matrize z.B. durch Kleben fest aufgesetzt werden, anschließend die Patrize (10) aufgesteckt und der Basissockel erstellt werden oder das Modell in die Patrize gesteckt werden, die bereits im Artikulator eingepaßt ist.

Die entsprechenden Zustände der Anordnung sind in den Ansprüchen 5 bis 7 enthalten.

Gemäß beiden Varianten sind nicht einzelne Befestigungs- und Positionierelemente, wie Stifte und Hülsen voneinander unabhängig direkt in dem zahnmedizinischen Modell bzw. an dem Artikulator angeordnet, sondern sie bilden nur noch zusammengefaßte Formmerkmale einer einstückigen Matrize und einer Patrize. Die Matrize beinhaltet dabei die Vertiefungen der Anordnung, an welche die Erhöhungen der Patrize angepaßt sind. Beim Verbinden der Matrize mit der Patrize erfolgt also eine gegenseitige Führung einer Vielzahl von Elementen zuverlässig ohne Zerstörungsgefahr oder hohe Abnutzung. Zur sicheren Halterung der Patrize in der Matrize sind diese mit Preßsitz gefertigt, so daß sie aneinander haften, aber noch lösbar sind. Hierzu tragen die elastischen Wände der eigentlichen Befestigungs- und Positionierelemente bei, die in der Nähe der Fußpunkte bzw. des Bodens der entsprechenden Erhöhungen und Vertiefungen jedoch weniger nachgiebig sind.

In der ersten Variante wird die Matrize mit dem Modell, welches aus Gips oder anderen Materialien wie Epoxy besteht, fest verbunden. Die Patrize hingegen ist fest an einer Trägerplatte, die hier eine Hilfsträgerplatte als Positionier- und Arbeitshilfs ist, insbesondere aus Kunststoff ist, angebracht, welche einen inneren Basis-Bestandteil eines in den Modellhalter bzw. Artikulator passenden Sockels bildet. Die Matrize ist hingegen mit dem Modell selbst verbunden und ruht in diesem dergestalt, daß die Seite, die Vertiefungen aufweist, von außen zugänglich ist. Die Verbindung des Modells mit der Matrize kann in der Weise erfolgen, daß die Matrize zunächst auf die Patrize aufgesteckt wird, welche von der Trägerplatte gehalten ist. Dann wird diese Anordung in das gegossene Modell eingedrückt, solange dieses noch nicht befestigt ist.

Die Trägerplatte mit der Patrize kann in dem Modellhalter fest eingesetzt werden, wobei diese Verbindung zwischen der Patrize und dem Modellhalter nicht mehr gelöst zu werden braucht, solange das zugehörige Modell gegebenenfalls nach mehreren Bearbeitungs- und Einstellschritten geprüft wird.

Bevorzugt ist die Matrize nach Anspruch 9 annähernd pyramidenstumpfförmig mit einer ersten Grundfläche, aus welcher die Vertiefungen ausgeformt sind, und einer zu der ersten Grundfläche annähernd parallelen größeren zweiten planen Grundfläche ausgebildet. Aufgrund dieser Formgebung kann die Matrize praktisch nicht aus dem Modell unbeabsichtigt herausgezogen werden. Sie wird vielmehr durch die Wände, welche die beiden Grundflächen verbinden, sicher in dem Modell gehalten.

In der zweiten Variante der Anordnung können die Patrize und die Matrize im wesentlichen gleich wie bei der ersten Variante gestaltet sein. Die zweite Anordnung sieht jedoch vor, daß die Matrize mit einer Trägerplatte fest verbindbar ist, hingegen die Patrize mit dem Modell.

Die Patrize ist dabei nach Anspruch 14 so in einen Sockel eingegipst, daß die Erhebungen der Patrize offenliegen. Der Sockel kann einen Bestandteil des Modellhalters bilden bzw. an diesem dauerhaft während der gesamten Bearbeitungs- und Prüfvorgänge des Modells befestigt sein. Die offenliegenden Erhebungen der Patrize können dann in die Vertiefungen der Matrize eingedrückt werden, wodurch das Modell über die Trägerplatte und die Matrize an der Patrize bzw. dem Sockel gehalten wird.

Nach Anspruch 15 ist die Patrize in der zweiten Variante der Erfindung dergestalt in den Sockel eingegipst bzw. eingebettet, daß angrenzend an die Patrize eine nach außen offene Vertiefung gebildet ist, welche die Matrize im wesentlichen formschlüssig aufnehmen kann. Daraus ergibt sich, daß die Trägerplatte, auf welcher die Matrize geklebt ist, in der Umgebung der Matrize formschlüssig an dem Gipsteil bzw. Sockel liegen kann, in dem die Patrize untergebracht ist.

Nach Anspruch 16 sind die Matrize an einem umlaufenden Innenrand und die Patrize an einem umlaufenden Außenrand nach innen abgeschrägt, dergestalt, daß Führungen gebildet sind, welche die Matrize und die Patrize bei einem Zusammenschieben gegeneinander führen und ein Einsetzen der Patrize in die Matrize erleichern. Dies bedeutet, daß die Patrize beim Eingipsen in den Sockel zum Einartikulieren in dem Sockel festgehalten werden kann, da sich die auch hier annähernd pyramidenförmige Grundform der Patrize zum Innern des Sockels aus Gips hin erweitert. Die Patrize kann daher nicht ohne weiteres aus dem Sockel aus Gips unbeabsichtigt herausgezogen werden, wenn beispielsweise das Modell abgezogen wird, wobei die Verbindung zwischen Patrize und Matrize gelöst wird.

In einer Ausführungsform können die Vertiefungen der Matrize und die Erhöhungen der Patrize im wesentlichen zylindrisch sein. Die Haftung zwischen diesen Vertiefungen und Erhöhungen ist besonders gut.

Es ist aber auch denkbar, daß statt der zylindrischen Erhöhungen und Vertiefungen annähernd konische Erhöhungen und Vertiefungen ausgeformt werden, die bei entsprechender Passung ebenfalls lösbare Preßsitze ergeben.

Statt der im Querschnitt runden Erhöhungen und Vertiefungen können diese auch mit Kanten als Parallelepipede geformt sein.

Als Material zur Herstellung der Matrize und der Patrize eignet sich besonders ein plastisch verformbarer aushärtbarer Kunststoff, wie ein Thermoplast oder ein Duroplast. Aus diesem können die Matrize und die Patrize gegossen werden. Allgemein sind jedoch eine Vielfalt von Materialien, die plastisch geformt und gegossen werden können und danach aushärtbar sind, geeignet. Das Aushärten kann wiederum durch Austrocknen, Druckhärtung, Ultraschall, Licht, Hochfrequenz, Zweikomponentenabbindung erfolgen.

Es ist aber auch eine Herstellung der Matrize und Patrize aus Metall möglich.

Ausführungsformen der Erfindung werden im folgenden anhand einer Zeichnung mit 11 Figuren erläutert. Es zeigen:
- Fig. 1: eine Matrize in einem Schnitt von der Seite gesehen,
- Fig. 2: die Matrize nach Fig. 1 in einer Draufsicht,
- Fig. 3: eine Patrize in einem Schnitt von der Seite gesehen,
- Fig. 4: die Patrize nach Fig. 3 in einer Draufsicht,
- Fig. 5 bis 8: verschiedene Zustände der Patrize mit einer Trägerplatte sowie des Eingipsens der Matrize bis zum vollständigen Sockel zum Einartikulieren in einer ersten Variante,
- Fig. 9 bis 11: entsprechende Zustände des Verbindens der Matrize mit einer Trägerplatte und des Eingipsens der Patrize in einer zweiten Variante.

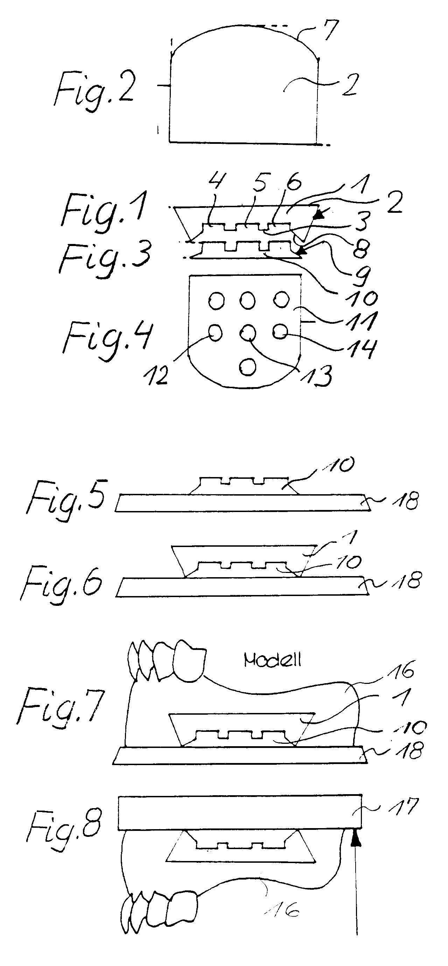

In Fig. 1 ist eine Matrize mit 1 bezeichnet, die sich sowohl zur Verwirklichung der ersten Variante als auch der zweiten Variante des Verbindens mit einem Modell bzw. mit einer Trägerplatte eignet. Die Matrize hat eine obere plane Grundfläche 2, der eine Grundfläche 3 unten entspricht, aus der zylindrische Vertiefungen ausgeformt sind. In Fig. 1 sind die Vertiefungen 4 bis 6 erkennbar. Jedoch sind weitere Vertiefungen entsprechend der unten zu erörternden Anzahl von Erhebungen einer Patrize gemäß Fig. 3 und 4 vorgesehen. Die Matrize ist annähernd pyramidenstumpfförmig, wenn von einer gekrümmten Seite 7 in Fig. 2 abgesehen wird.

Angrenzend an die erste innere Grundfläche 3 weist die Matrize einen abgeschrägten umlaufenden Innenrand 8 auf, in welchen ein ebenfalls abgeschrägter umlaufender Außenrand 9 einer Patrize 10 gleitbeweglich paßt.

Infolge des abgeschrägten Innenrands der Matrize und des abgeschrägten Außenrands der Patrize werden diese beiden Befestigungs- und Positionierteile beim Zusammenstecken relativ zueinander geführt.

Die Patrize weist auf ihrer oberen Grundfläche 11 eine Gruppe von zylindrischen Erhebungen, z.B. 12 bis 14 auf, deren Form und Anordnung der Form und Anordnung der Vertiefungen in der Matrize 1 entspricht, so daß sämtliche Erhebungen der Patrize - auch die nicht bezeichneten - von entsprechenden Vertiefungen aufgenommen werden können. Die Erhebungen und Vertiefungen passen unter Preßsitz ineinander.

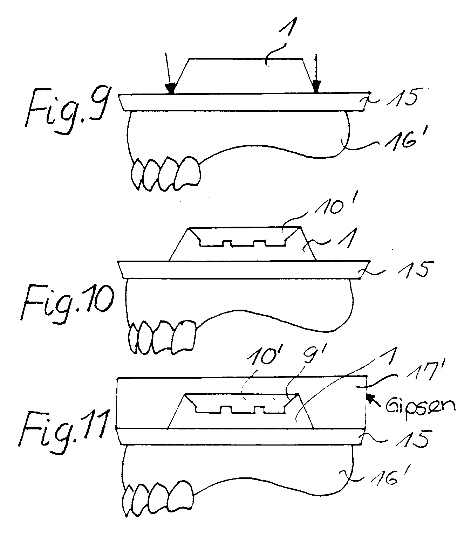

In den Fig. 5 bis 8 sind in einer ersten Variante verschiedene Stadien der Anordnung aneinander angepaßter Befestigungs- und Positionsteile gezeigt, die im wesentlichen mit der oben beschriebenen Patrize 10 und der oben beschriebenen Matrize 1 gebildet werden. Gemäß Fig. 5 ist die Patrize mit einer planen, nicht bezeichneten Seite auf eine Trägerplatte 18 aus Kunststoff geklebt.

Gemäß Fig. 6 ist auf die aufgeklebte Patrize 10 die Matrize 1 gesteckt.

Anschließend kann das Modell unter weitgehendem Einschluß der Matrize 1 aus Gips oder anderen Modellwerkstoffen wie Epoxy, Harze, Schellack gegossen werden. Das Modell trägt das Bezugszeichen 16. Der weitgehende - d.h., mit Ausnahme der Grundfläche 3 und des abgeschrägten Innenrands 8 vollständige Einschluß - erfolgt dadurch, daß die Teileanordnung gemäß Fig. 6 in das gegossene Modell gedrückt wird, solange dies noch flüssig ist oder noch umgossen werden kann.

Die Trägerplatte 18 dient zur Anbringung in einem Artikulator, wozu je nach Befestigungsvorrichtung des Artikulators die Trägerplatte zu einem Sockel 17 zu ergänzen ist.

Der Sockel 17 wird dann in dem Artikulator befestigt, ebenso ein zweites analog aufgebautes Teil mit einem komplementären Modell. Zur Nacharbeitung des Modell kann nun dieses von dem Sockel 17 abgezogen werden, wobei der Sockel 17 in dem Artikulator verbleibt. Nach Bearbeitung des Modells kann dieses wieder auf den Sockel geschoben werden, wobei die Matrize 1 und die Patrize 10 gewährleisten, daß das Modell bezüglich des Sockels 17 und des übrigen Artikulators die gleiche Stelle einnimmt wie vor Entfernung und Bearbeitung.

Die in dem Beispiel dargestellte Matrize 1 und die zugehörige Patrize 10 bestehen bevorzugt aus Thermoplasten oder Duroplastmaterialien. Die zweite Variante der Anordnung von aneinander angepaßten Befestigungs- und Positionierteilen mit der Matrize 1 und einer Patrize 10', wie die oben beschriebene Patrize 10, ist mit den Fig. 9 bis 11 gezeigt. Hierbei ist die Matrize 1, die in Fig. 9 nicht im Querschnitt sondern in Seitenansicht dargestellt ist, auf eine beliebige handelsübliche Trägerplatte 15 oder ein Modell geklebt oder andersartig fest montiert. Auf der entgegengesetzten Seite trägt die Trägerplatte 15 das Modell 16' aus Gips.

Gemäß Fig. 10 wird in die aufgeklebte Matrize 1 die Patrize 10' gesteckt, und der Teil oberhalb der Trägerplatte 15 wird derart zu einem Sockel 17' eingegipst, daß der Sockel an der Patrize 10' haftet, nicht aber an der Matrize 1.

Der Sockel 17 kann jetzt in den Artikulator fest eingesetzt werden, wonach bei späteren Anpassungs- und Bearbeitungsvorgängen das Modell 16' mit der Trägerplatte 15 und der Matrize 1 entnommen werden kann und wieder an die gleiche Stelle in den Sockel 17' mit der Patrize eingesetzt werden kann. Der Sockel 17' bildet also eine Ausnehmung - in Fig. 11 nicht bezeichnet - , die der Form der Matrize oberhalb der Trägerplatte 15 entspricht. Die Patrize 10' kann in dem Sockel 17' weiter dadurch sicher gehalten werden, daß ein Abschnitt des schrägen Außenrands 9' der Patrize abweichend von der zeichnerischen Darstellung in die Gipsmasse des Sockels 17' ragt.

In beiden Varianten bestehen die Matrize 1 und die Patrize 10 bzw. 10' bevorzugt aus Thermo- oder Duroplasten. Metalle und andere Formmaterialien sind ebenfalls vorstellbar.

## Patentansprüche

1. Anordnung von aneinander angepaßten Befestigungs- und Positionierteilen, welche ein zahnmedizinisches Modell in einem Modellhalter, insbesondere Artikulator, lösbar halten,
**dadurch gekennzeichnet,**
daß eine Matrize (1) mit mehreren Vertiefungen (14 bis 16) und eine Patrize (10,10') mit mehreren an die Vertiefungen (4 bis 6) der Matrize (1) angepaßten Erhöhungen (12 bis 14) mit einer Trägerplatte (15, 18) oder einer Aufnahme des Modells (16,16') fest verbindbar sind.

2. Anordnung nach Anspruch 1,
**dadurch gekennzeichnet,**
daß die Patrize (10) auf eine Hilfsträgerplatte (18) aufgesetzt ist und daß die Matrize (1) auf die Patrize (10) aufgesteckt ist (Fig. 6).

3. Anordnung nach Anspruch 2,
**dadurch gekennzeichnet,**
daß auf die Hilfsträgerplatte (18) mit Patrize (10) und aufgesteckter Matrize (1) das Zahnmodell (16) gegossen ist (Fig. 7).

4. Anordnung nach Anspruch 3,
**dadurch gekennzeichnet,**
daß an das ausgehärtete Modell mit Matrize (1) aber entfernter Hilfsträgerplatte (18) ein in den Modellhalter passender Grundsockel (17) gegossen ist (Fig. 8).

5. Anordnung nach Anspruch 1,
**dadurch gekennzeichnet,**
daß die Matrize (1) auf eine Trägerplatte (15) des Modells (16) fest aufgesetzt ist (Fig. 9).

6. Anordnung nach Anspruch 5,
**dadurch gekennzeichnet,**
daß die Matrize (1) mit aufgesetzter Trägerplatte (15) des Modells (16) in die Patrize (10) gesteckt ist (Fig. 10).

7. Anordnung nach Anspruch 6,
**dadurch gekennzeichnet,**
daß an der Trägerplatte (15) mit fest aufgesetzter Matrize (1) und aufgesteckter Patrize (10) der Grundsockel (17') erstellt ist.

8. Anordnung nach den Ansprüchen 5 bis 7,
**dadurch gekennzeichnet,**
daß die Trägerplatte (15) aus Kunststoff besteht.

9. Anordnung nach einem der vorangehenden Ansprüche,
**dadurch gekennzeichnet,**
daß die Matrize (1) annähernd pyramidenstumpfförmig mit einer ersten Grundfläche (3), aus welcher die Vertiefungen (4 bis 6) ausgeformt sind, und einer zu der ersten Grundfläche (3) annähernd parallelen größeren zweiten Planen Grundfläche (2) ausgebildet ist.

10. Anordnung nach einem der Ansprüche 3 bis 9,
**dadurch gekennzeichnet,**
daß das Modell (16) aus Gips gegossen ist.

11. Anordnung nach einem der Ansprüche 3 bis 9,
**dadurch gekennzeichnet,**
daß das Modell (16) aus Epoxy gegossen ist.

12. Anordnung nach den Ansprüchen 8 bis 11,
**dadurch gekennzeichnet,**
daß die Matrize (1) mit ihrer zweiten Grundfläche (2) mit dem Modell (16) dergestalt vergossen ist, daß die erste Grundfläche (3) mit den Vertiefungen nach außen offenliegt.

13. Anordnung nach den Ansprüchen 5 bis 9,
**dadurch gekennzeichnet,**
daß die Matrize (1) mit ihrer zweiten, planen Grundfläche (2) auf die Trägerplatte (15) geklebt ist.

14. Anordnung nach einem der Ansprüche 2 bis 4,
**dadurch gekennzeichnet,**
daß die Patrize (10') in einem Sockel (17') eingegipst ist, dergestalt, daß die Erhöhungen der Patrize (10') offenliegen.

15. Anordnung nach einem der Ansprüche 5 bis 7,
**dadurch gekennzeichnet,**
daß die Patrize (10') in den Sockel (17') eingegipst ist, der angrenzend an die Patrize eine nach außen offene Vertiefung bildet, dergestalt, daß die Vertiefung die Matrize (1) im wesentlichen formschlüssig aufnimmt.

16. Anordnung nach einem der vorangehenden Ansprüche,
**dadurch gekennzeichnet,**
daß die Matrize (1) an einem umlaufenden Innenrand (8) und die Patrize (10,10') an einem umlaufenden Außenrand (9) nach innen abgeschrägt sind, dergestalt, daß Führungen gebildet sind, welche die Matrize (1) und Patrize (10,10') bei einem Zusammenschieben gegeneinander führen.

17. Anordnung nach einem der vorangehenden Ansprüche,
**dadurch gekennzeichnet,**
daß die Vertiefungen (4 bis 6) der Matrize (1) und die Erhöhungen (12 bis 14) der Patrize (1) im wesentlichen zylindrisch sind.

18. Anordnung nach einem der Ansprüche 1 bis 17,
**gekennzeichnet durch**
im wesentlichen konische Erhöhungen und Vertiefungen.

19. Anordnung nach einem der Ansprüche 1 bis 17,
**dadurch gekennzeichnet,**
daß die Erhöhungen und Vertiefungen im wesentlichen als Parallelepipede geformt sind.

20. Anordnung nach einem der vorangehenden Ansprüche,
**dadurch gekennzeichnet,**
daß die Matrize (1) und die Patrize (10,10') aus einem plastisch verformbaren, aushärtbaren Kunststoff bestehen.

21. Anordnung nach Anspruch 20,
**dadurch gekennzeichnet,**
daß die Matrize (1) und die Patrize (10,10') aus Epoxy-Material bestehen.

22. Anordnung nach Anspruch 20 oder 21,
**dadurch gekennzeichnet,**
daß die Matrize (1) und die Patrize (10,10') gegossen sind.
